# FASCICULE DE BREVET EUROPEEN

(11) **EP 3 350 451 B1**
(45) Date de publication et mention de la délivrance du brevet: **28.10.2020**
(21) Numéro de dépôt: 16775292.2
(22) Date de dépôt: 09.09.2016
(51) Int. Cl.: F04D 29/26, F16D 9/06

(54) **VENTILATEUR ROTATIVEMENT CONNECTÉ À UN ARBRE MOTEUR PAR L'INTERMÉDIAIRE D'UN ÉLÉMENT FUSIBLE**
LÜFTER, DAS MITTELS EINES BRECHBAREN TEILS MIT EINER ANTRIEBSWELLE DREHVERBUNDEN IST
FAN THAT IS ROTATIVELY CONNECTED TO A DRIVING SHAFT BY MEANS OF A FRANGIBLE ELEMENT

(30) Priorité: 17.09.2015 FR 1558750
(43) Date de publication de la demande: 25.07.2018
(73) Titulaire: Safran Electrical & Power, 31702 Blagnac Cedex (FR)
(72) Inventeur: DEL RIO, Fabien, 31702 Blagnac Cedex (FR); GARCIA, Frédéric, 31702 Blagnac Cedex (FR); GAUHAROU, François, 31702 Blagnac Cedex (FR); SALVADOR, René, 31702 Blagnac Cedex (FR)
(74) Mandataire: Gevers & Orès
(86) Numéro de dépôt international: PCT/FR2016/052264
(87) Numéro de publication internationale: WO 2017/046490

(56) Documents cités:
- EP-A2- 0 590 794
- WO-A1-2016/097529
- GB-A- 2 334 553
- US-A- 4 193 741
- US-A1- 2014 112 809

## Description

### DOMAINE TECHNIQUE

La présente invention concerne notamment un ventilateur, en particulier pour un groupe de refroidissement d'aéronef.

### ETAT DE L'ART

L'état de l'art comprend notamment les documents GB 2 334 553 A, US 2014/112809 A1, EP 0 590 794 A2, et US 4 193 741 A.

Les moteurs d'aéronefs sont équipés de groupes de refroidissement de fluides tels que d'huile par exemple. Un groupe de refroidissement d'huile de la technique actuelle comprend un échangeur air-huile et un ventilateur qui est destiné à aspirer de l'air à travers l'échangeur.

L'échangeur est en général de type « brique » et le ventilateur comprend une roue qui est disposée à côté de l'échangeur et qui aspire de l'air à travers lui afin que l'air prélève de l'énergie calorifique de l'huile circulant dans l'échangeur.

Le ventilateur est un ventilateur mécanique et sa roue est entraînée en rotation par une ligne d'arbre qui est reliée à un arbre de sortie d'une boîte d'engrenages ou à des moyens de prélèvement mécanique sur le moteur de l'aéronef.

Les motoristes et/ou les hélicoptéristes, peuvent exiger que, en cas de problème au niveau de la roue du ventilateur, tel qu'un blocage de la roue ou l'ingestion d'un corps étranger dans le ventilateur, l'augmentation du couple d'entraînement de la roue au-delà d'un certain seuil entraîne une casse maîtrisée d'une pièce afin de désaccoupler ou désolidariser en rotation la roue de ventilateur de l'arbre de sortie de la boîte d'engrenages ou des moyens de prélèvement mécanique sur le moteur.

Dans la technique actuelle, cette fonction de sécurité est prévue sur la ligne d'arbre d'entraînement de la roue du ventilateur. La ligne d'arbre comprend un tronçon présentant une partie fusible destinée à se rompre dans le cas où le couple transmis à la roue dépasse un certain seuil. Ce tronçon est alors appelé « arbre à casser » puisque c'est lui qui est destiné à se rompre dans le cas précité.

En plus de cet arbre à casser, la ligne d'arbre comprend plusieurs éléments (arbre principal, fourreau, roulements, flasque, rondelle de précharge, etc.) et est donc relativement complexe. L'arbre à casser forme une pièce intermédiaire qui entraîne un déport de la roue vis-à-vis de l'arbre de sortie et nécessite un guidage de la ligne d'arbre par des roulements et des pièces annexes. Bien que cette complexité ne soit pas exigée par le client, elle est nécessaire pour intégrer la fonction de sécurité. La ligne d'arbre est donc coûteuse et a une masse importante. Par ailleurs, la présence des roulements diminue la fiabilité et la durée de vie du ventilateur.

### EXPOSE DE L'INVENTION

La présente invention propose une solution simple, efficace et économique au problème précité.

L'invention propose un ventilateur, pour un groupe de refroidissement d'aéronef, comportant une roue et une ligne d'arbre d'entraînement de la roue autour d'un axe, ladite roue comprenant :
- un moyeu portant une rangée annulaire de pales, et
- des moyens de liaison à ladite ligne d'arbre, qui sont logés à l'intérieur dudit moyeu, lesdits moyens de liaison comprenant une douille comportant un alésage interne configuré pour recevoir ledit arbre, ladite douille étant située sensiblement dans un plan transversal audit axe ou est traversé par ledit plan, qui passe sensiblement par lesdites pales,
   lesdits moyens de liaison comprenant au moins un élément fusible de sécurité qui s'étend ou est disposé autour dudit axe et qui est configuré pour se rompre et désolidariser en rotation au moins une partie desdits moyens de ladite ligne d'arbre lorsqu'un couple d'entraînement de la roue transmis par ladite ligne d'arbre dépasse un certain seuil, ledit au moins un élément fusible ayant une forme allongée, son axe d'allongement étant parallèle audit axe.

L'invention propose ainsi de prévoir la fonction de sécurité sur la roue de ventilateur plutôt que sur la ligne d'arbre d'entraînement de cette roue. La ligne d'arbre peut ainsi être simplifiée et être moins coûteuse et moins lourde que celle de la technique antérieure. Cela permet de réduire le coût du ventilateur mais également d'augmenter sa fiabilité. La roue de ventilateur intègre donc un élément fusible permettant de désaccoupler la roue de la ligne d'arbre lorsque le couple transmis par l'arbre ou la ligne d'arbre dépasse un seuil prédéterminé.

Le couple nominal à transmettre par l'élément fusible de la roue est de préférence compris entre 1 et 15 N.m. Le seuil de rupture peut représenter dix fois le couple nominal, et être de l'ordre de 10 à 150 N.m.

Le ventilateur selon l'invention peut comprendre une ou plusieurs des caractéristiques suivantes, prises isolément les unes des autres ou en combinaison les unes avec les autres :
- ledit au moins un élément fusible est situé sensiblement dans un plan transversal audit axe ou est traversé par ledit plan, qui passe sensiblement par lesdites pales,
- ladite douille est montée dans un orifice central du moyeu et est solidarisée en rotation au moyeu grâce audit élément fusible, tel qu'une ou plusieurs aiguilles fusibles,
- ladite douille comprend une collerette annulaire externe appliquée contre une face transversale dudit moyeu, ledit au moins un élément fusible étant monté dans des trous borgnes respectifs de ladite collerette et dudit moyeu,
- ladite douille comprend au moins une fente transversale configurée pour recevoir une goupille de solidarisation en rotation de la douille audit arbre,
- ledit au moins un élément fusible comprend une ou plusieurs aiguilles fusibles, et
- la roue est du type cage d'écureuil, axiale, centrifuge, ou mixte.

L'invention concerne encore un groupe de refroidissement d'aéronef, comportant un échangeur de chaleur, par exemple air-huile, et un ventilateur tel que décrit ci-dessus.

L'invention concerne également un moteur ou une boîte d'engrenages pour un aéronef, tel qu'un hélicoptère, comportant un arbre de sortie et un groupe de refroidissement tel que décrit ci-dessus dont la roue est entraînée par ledit arbre de sortie.

La présente invention concerne enfin un aéronef, comportant au moins un groupe de refroidissement ou un moteur ou une boîte d'engrenages tel que décrit ci-dessus.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'un moteur d'aéronef équipé d'un groupe de refroidissement,
- la figure 2 est une vue schématique en perspective du ventilateur du groupe de refroidissement de la figure 1,
- la figure 3 est une vue schématique partielle en coupe axiale du ventilateur de la figure 2, et représente la technique antérieure à la présente invention,
- les figures 4 à 6 représentent un mode de réalisation, la figure 4 étant une vue schématique en perspective d'une roue de ventilateur et d'un arbre d'entraînement, et les figures 5 et 6 étant des vues schématiques en coupe axiale et en perspective de la roue et de l'arbre, et
- les figures 7 à 9 représentent le mode de réalisation de l'invention, la figure 7 étant une vue schématique en perspective d'une roue de ventilateur et d'un arbre d'entraînement, et les figures 8 et 9 étant des vues schématiques en coupe axiale et en perspective de la roue et de l'arbre.

### DESCRIPTION DETAILLEE

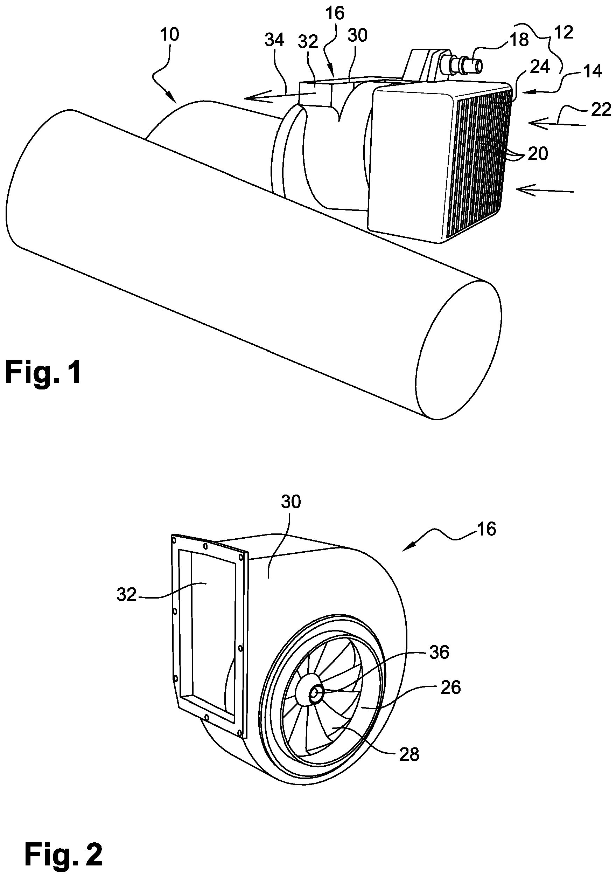

La figure 1 montre un moteur 10 d'aéronef, ici d'hélicoptère, qui est équipé d'un groupe de refroidissement 12 de l'huile du moteur. Le groupe 12 comporte un échangeur de chaleur air-huile 14 et un ventilateur 16 qui est mieux visible en figure 2.

L'échangeur de chaleur 14 est de type « brique » et a une forme parallélépipédique. Il comprend un circuit d'huile raccordé à des ports 18 d'alimentation et d'évacuation d'huile dont un seul est visible en figure 1. Il comprend en outre des ailettes 20 définissant des surfaces d'échange thermique avec un flux d'air traversant l'échangeur (flèche 22). La section frontale ou d'entrée 24 de l'échangeur a une forme de parallélogramme. La section de sortie (non visible) de l'échangeur est aussi de forme parallélogramme. Un tuyau de raccordement est monté entre la section de sortie de l'échangeur et la section d'aspiration ou d'entrée 26 du ventilateur et assure la communication fluidique entre ces sections.

Le ventilateur 16 est ici du type centrifuge et comprend une roue 28 qui est entraînée par une ligne d'arbre 36 pour forcer l'air à être aspiré à travers l'échangeur 14 et à balayer les ailettes 20. L'air aspiré passe à travers la roue et est expulsé radialement vers l'extérieur. Il est canalisé par le corps 30 du ventilateur qui forme une volute dont la sortie d'air 32 a une orientation sensiblement tangentielle (flèche 34) par rapport à une circonférence centrée sur l'axe de rotation de la roue.

Comme on le voit à la figure 1, l'échangeur 14 et le ventilateur 16 sont disposés à côté l'un de l'autre. Le corps 30 du ventilateur est fixé sur un carter du moteur et l'échangeur 14 est en général fixé en porte-à-faux sur le ventilateur (ou directement sur le moteur ou la boîte d'engrenage).

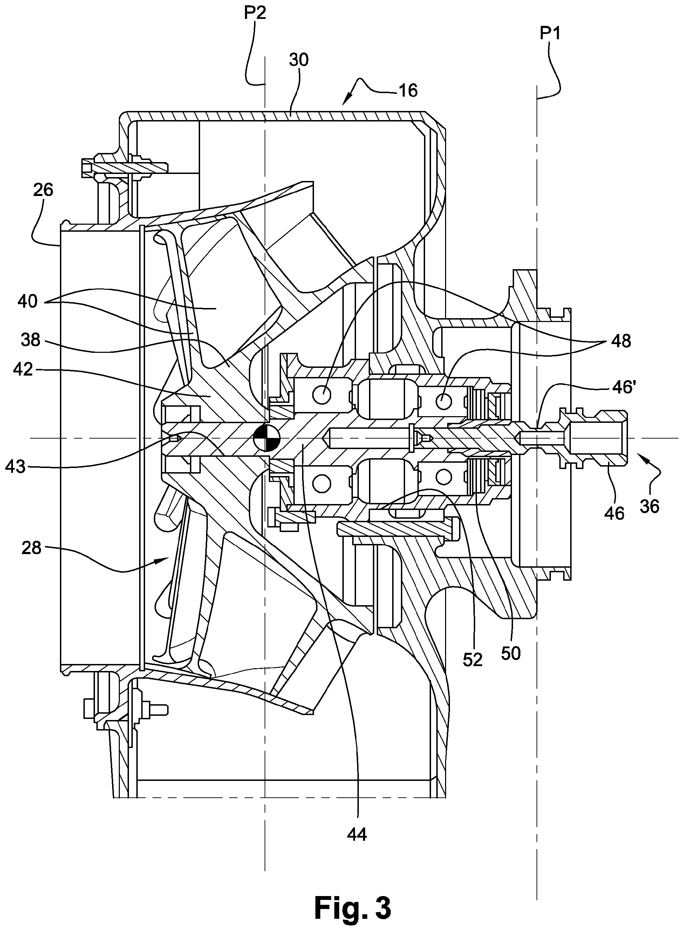

La roue 28 du ventilateur 16 et la ligne d'arbre 36 d'entraînement de la roue 28 sont mieux visibles à la figure 3.

La roue 28 comprend un moyeu 38 portant une rangée annulaire de pales 40 à sa périphérie. Elle comprend également des moyens de liaison 42 à la ligne d'arbre 36. Ces moyens de liaison 42 sont logés dans le moyeu 38 et sont ici formés d'une seule pièce avec ce dernier. Les moyens de liaison comprennent un alésage 43 traversant et s'étendant le long de l'axe A de rotation de la roue. Les pales 40 sont également formées d'une seule pièce avec le moyeu 38. La roue 28 est ainsi monobloc.

La ligne d'arbre 36 comprend plusieurs éléments : un arbre principal 44, un second arbre ou tronçon d'arbre appelé « arbre à casser » 46, des roulements 48, un fourreau 50, et des pièces annexes telles qu'un flasque, une rondelle de précharge, de la visserie, etc.

L'arbre principal 44 comprend une extrémité qui traverse l'alésage 43 et comprend des moyens d'accouplement en rotation qui coopèrent avec les moyens de liaison 42 de la roue 28.

L'extrémité opposée de l'arbre principal 44 reçoit une extrémité de l'arbre à casser 46 qui comprend une portion 46' de plus faible diamètre formant une partie fusible du type précité. Cette portion 46' s'étend dans un plan P1, radial ou transversal par rapport à l'axe de rotation de la roue 28, qui est éloigné d'un plan P2 parallèle passant sensiblement par les pales 40 de la roue du ventilateur.

L'arbre principal 44 est centré et guidé en rotation par les roulements 48 dans le fourreau 50 qui entoure une partie du tronçon 44 et de l'arbre à casser 46 et qui est monté dans un orifice 52 du corps 30 du ventilateur 16.

Comme expliqué dans ce qui précède, cette technologie est complexe et présente des inconvénients liés au fait que la fonction de sécurité est prévue sur la ligne d'arbre 36 par l'intermédiaire de l'arbre à casser 46.

L'invention apporte une solution grâce à une roue à casser de ventilateur qui remplace l'arbre à casser et permet de simplifier la ligne d'arbre d'entraînement de la roue du ventilateur.

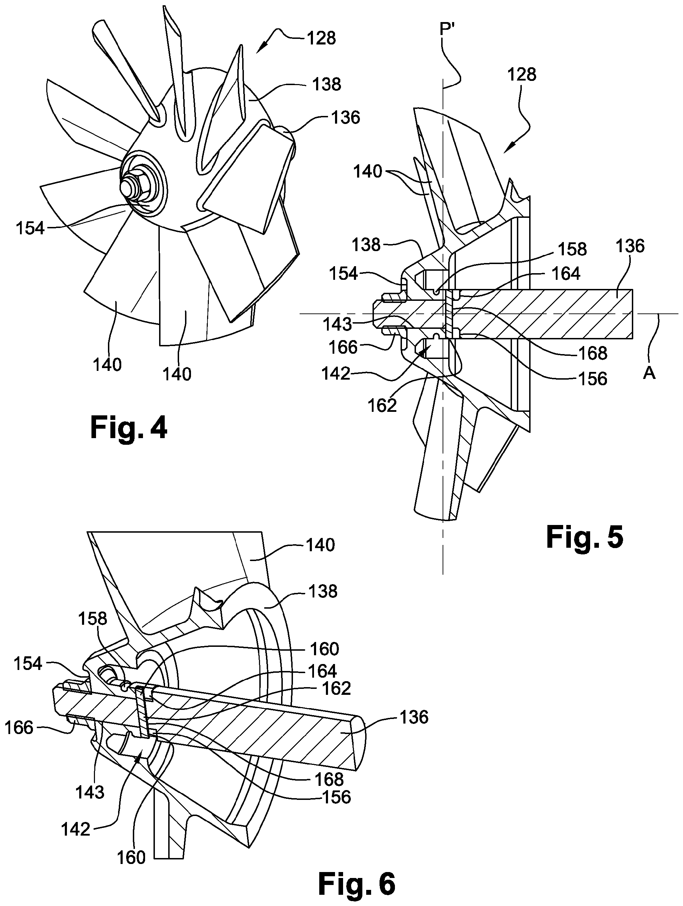

Les figures 4 à 6 représentent un mode de réalisation. Ces figures montrent une roue 128 de ventilateur et sa ligne d'arbre d'entraînement qui peut comprendre essentiellement un arbre d'entraînement 136.

Bien que le reste du ventilateur ne soit pas décrit dans ce qui suit, on pourra se référer aux caractéristiques du ventilateur décrit dans ce qui précède et représenté aux figures 1 à 3 pour avoir un exemple d'intégration de la roue selon l'invention.

La roue 128 comprend un moyeu 138 portant une rangée annulaire de pales 140 à sa périphérie. Elle comprend également des moyens 142 de liaison à l'arbre 136. Ces moyens de liaison comprennent une douille 142 qui s'étend le long de l'axe A de rotation de la roue. Le moyeu 138 comprend une paroi sensiblement tronconique et la douille 142 est logée dans le moyeu, ici au voisinage de son extrémité de plus petit diamètre.

La douille 142, les pales 140 et le moyeu 138 sont formés d'une seule pièce. La roue 128 est donc monobloc.

La douille 142 a une forme générale cylindrique et tubulaire et comprend un alésage cylindrique interne 143 suivant l'axe A. Cet alésage 143 traverse axialement la douille 142 et débouche au centre du moyeu, à son extrémité de plus petit diamètre. A cette extrémité, la douille ou le moyeu définit une face 154 radiale ou transversale par rapport à l'axe A.

La douille 142 s'étend sur une partie de la dimension axiale du moyeu (entre 20 et 50% de sa longueur dans l'exemple représenté).

La douille 142 a son extrémité axiale opposée à ladite face 154 qui est libre et forme une face radiale 156 de butée de l'arbre 136.

A distance de ses extrémités axiales, la douille 142 comprend sur sa périphérie externe une gorge annulaire 158. Cette gorge crée localement une diminution de l'épaisseur radiale de la douille 142 et donc un affaiblissement mécanique local de la douille. Cette gorge 158 définit ainsi une partie fusible de la douille. La résistance mécanique de cette partie fusible sera déterminée en fonction du seuil de couple à partir duquel un désaccouplement ou une désolidarisation en rotation de la roue 128 vis-à-vis de l'arbre 136 est souhaité pour des questions de sécurité, et pourra être calculée par un homme de l'art. La gorge 158 s'étend dans un plan P transversal passant sensiblement par les pales 140.

Dans l'exemple représenté, la gorge 158 est sensiblement située à mi-distance des faces 154, 156. Entre la gorge 158 et la face 156, la douille comprend une fente transversale 160 s'étendant sensiblement sur une demi-section de la douille. Cette fente 160 reçoit une goupille cylindrique 162 d'accouplement en rotation de la roue 128 à l'arbre 136.

L'arbre 136 comprend deux portions cylindriques de diamètres différents et qui sont reliés l'une à l'autre par un épaulement cylindrique 164. La portion de l'arbre 136 de plus petit diamètre est engagée dans la douille 142 et la traverse jusqu'à ce que l'épaulement 164 vienne en butée sur la face 156 de la douille 142. L'extrémité libre de cette portion d'arbre comprend un filetage externe de vissage d'un écrou 166 qui est destiné à prendre appui sur la face 154. Un simple appui suffit, l'écrou n'étant pas destiné à serrer axialement l'arbre 136 et la roue. L'accouplement en rotation de la roue 128 et de l'arbre 136 est assuré par la goupille 162 qui est engagée dans la fente 160 de la douille 142 et dans un orifice 168 de la portion de plus petit diamètre de l'arbre 136. L'orifice 168 a de préférence un diamètre sensiblement identique à celui de la goupille 162.

La goupille 162 est centrée de part et d'autre de l'arbre (montage en force) puis la douille est positionnée sur l'arbre (montage glissant) en prenant soin d'aligner la goupille avec la fente 160 pour bien amener la face 156 en contact sur l'épaulement de l'arbre.

Lorsqu'un couple de rotation transmis par l'arbre 136 est supérieur au seuil prédéterminé, la douille 142 va se rompre au niveau de la gorge 158 et se diviser en deux parties axiales, une première partie qui reste liée au moyeu 138 et une seconde partie qui reste liée à l'arbre par la goupille 162. L'écrou 166 n'est pas serré et ne participe pas à l'accouplement en rotation de la roue, qui devient donc libre en rotation sur l'arbre 136 une fois que la douille est cassée. L'écrou 166 permet de maintenir axialement la roue 128 après la rupture de la douille 142.

Par exemple, la roue 128 est réalisée en aluminium et l'arbre 138 est réalisé en acier.

Après la rupture de la douille 142, l'arbre 136 peut être amené à tourner encore pendant une certaine durée et par exemple une ou deux heures. Du fait de la différence de vitesses entre l'arbre 136 et la roue 128, un échauffement des pièces peut intervenir et engendrer un frettage de la douille 142 sur la portion de plus petit diamètre de l'arbre 136, en particulier dans l'exemple précité où leurs matériaux sont différents. Pour éviter ce phénomène, cette portion d'arbre peut être traitée pour avoir un revêtement anti-frettage.

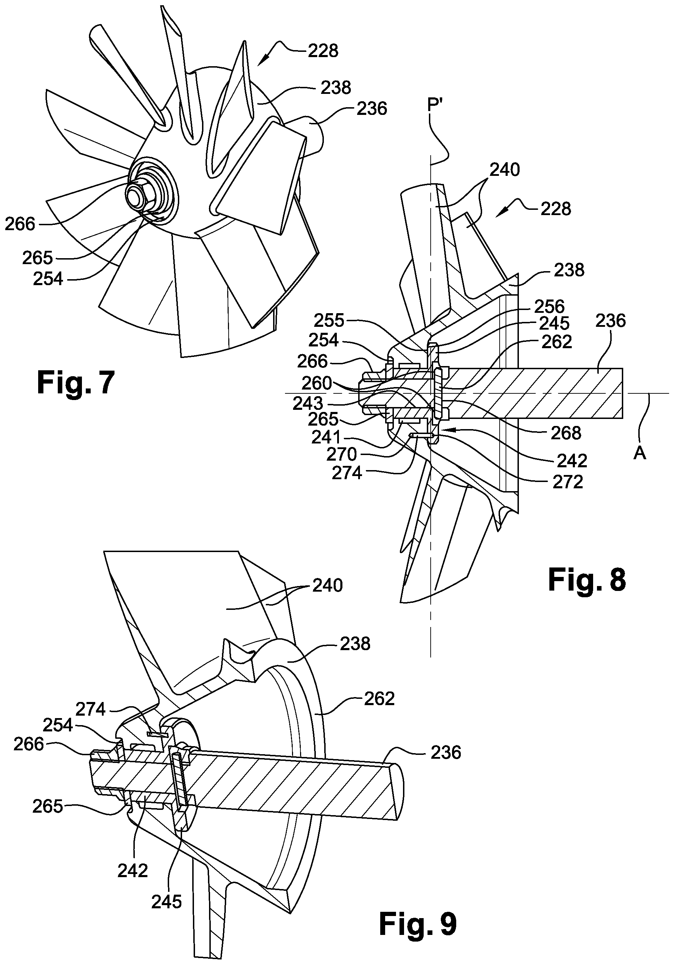

Les figures 7 à 9 représentent le mode de réalisation de l'invention. Ces figures montrent également une roue 228 de ventilateur et sa ligne d'arbre d'entraînement qui peut comprendre essentiellement un arbre d'entraînement 236. Comme dans le précédent mode de réalisation, bien que le reste du ventilateur ne soit pas décrit dans ce qui suit, on pourra se référer aux caractéristiques du ventilateur décrit en référence aux figures 1 à 3 pour avoir un exemple d'intégration de la roue selon l'invention.

La roue 228 comprend un moyeu 238 portant une rangée annulaire de pales 240 à sa périphérie. Elle comprend également des moyens 242 de liaison à l'arbre 236. Ces moyens de liaison comprennent une douille 242 qui s'étend le long de l'axe A de rotation de la roue. Le moyeu 238 comprend une paroi sensiblement tronconique et la douille 242 est logée dans le moyeu, ici au voisinage de son extrémité de plus petit diamètre.

Les pales 240 et le moyeu 238 sont formés d'une seule pièce et la douille 242 est rapportée dans un orifice central 241 du moyeu, qui est aligné sur l'axe A. Cet orifice 241 traverse axialement le moyeu 238 et débouche à une extrémité sur une première face radiale 254 du moyeu et à une extrémité opposée, située à l'intérieur du moyeu, sur une seconde face radiale 256.

La douille 242 a une forme générale cylindrique et tubulaire et comprend un alésage cylindrique interne 243 suivant l'axe A. Cet alésage traverse axialement la douille 242. La douille 242 comprend en outre une collerette annulaire externe 245 destinée à être appliquée axialement contre la face 256 du moyeu.

La collerette 245 est ici située à proximité d'une extrémité axiale de la douille 242. En position de montage de la douille 242 dans l'orifice 241 du moyeu, l'extrémité axiale de la douille située à distance de la collerette est en léger retrait par rapport à la face 254, vers l'intérieur du moyeu, et son extrémité axiale opposée (située au plus près de la collerette 245) forme une face radiale 255 de butée de l'arbre 236.

Au voisinage de la collerette 245, la douille 242 comprend une fente transversale 260 s'étendant sensiblement sur une demi-section de la douille. Cette fente 260 reçoit une goupille cylindrique 262 d'accouplement en rotation de la douille 242 à l'arbre 236.

La douille 242 s'étend sur une partie de la dimension axiale du moyeu (entre 20 et 50% de sa longueur dans l'exemple représenté).

Le moyeu 238 comprend au moins un trou borgne 270 (voire plusieurs) qui débouche sur sa face 256, c'est-à-dire du côté de la collerette de la douille 242. Ce trou borgne 270 a une forme allongée dans une direction parallèle à l'axe A.

La collerette 245 de la douille 242 comprend en regard de la face 256 un trou borgne 272 voire plusieurs. Ce trou borgne 272 débouche ainsi sur la face latérale annulaire de la collerette destinée à venir en appui contre la face 256. Le trou borgne 272 a une forme allongée dans une direction parallèle à l'axe A.

Les trous borgnes 270, 272 ont sensiblement le même diamètre et sont situés sur une même circonférence centrée sur l'axe A. Ils sont destinés à être alignés axialement pour recevoir une aiguille 274 d'accouplement ou de solidarisation en rotation de la douille 242 au moyeu 238. L'aiguille 274 a une forme allongée et s'étend le long de l'axe A.

Cette aiguille 274 forme ainsi un élément fusible. La résistance mécanique en cisaillement de cette aiguille sera déterminée en fonction du seuil de couple à partir duquel un désaccouplement ou une désolidarisation en rotation de la roue vis-à-vis de l'arbre est souhaité pour des questions de sécurité, et pourra être calculée par un homme de l'art. L'aiguille 274 est traversée par un plan transversal P' passant sensiblement par les pales 240.

Dans le cas où plusieurs trous borgnes 270, par exemple trois, sont alignés avec des trous borgnes 272, une aiguille 274 est logée dans chaque paire de trous borgnes 270, 272 (soit trois aiguilles dans l'exemple précité).

L'arbre 236 comprend deux portions cylindriques de diamètres différents et qui sont reliés l'une à l'autre par un épaulement cylindrique 264. La portion de l'arbre 236 de plus petit diamètre est engagée dans la douille 242 et la traverse jusqu'à ce que l'épaulement 264 vienne en butée sur la face 255 de la douille 242. L'extrémité libre de cette portion d'arbre comprend un filetage externe de vissage d'un écrou 266 qui est destiné à prendre appui sur la face 254, par exemple par l'intermédiaire d'une rondelle 265, en étant séparée par un jeu axial de la douille 242. L'accouplement en rotation de la roue 228 et de l'arbre 236 est assuré par la goupille 262 qui est engagée dans les orifices 260 de la douille 242 et dans un orifice 268 de la portion de plus petit diamètre de l'arbre 236. La goupille 262 est logée dans les orifices 260, 268 avant le vissage de l'écrou 266. L'arbre 236, la douille 242 et la goupille 262 peuvent être assemblés avant l'insertion de l'ensemble dans le moyeu.

Lorsqu'un couple de rotation transmis par l'arbre 236 est supérieur au seuil prédéterminé, l'aiguille va se rompre dans le plan P' et se scinder en deux parties, une première partie qui reste engagée dans le trou borgne 270 du moyeu 238 et une seconde partie qui reste engagée dans le trou borgne 272 de la collerette 245 de la douille 242. L'écrou 266 n'est pas serré et ne participe pas à l'accouplement en rotation de la roue, qui devient donc libre en rotation sur la douille 242 une fois que l'aiguille 274 est cassée. L'écrou 266 permet de maintenir axialement la roue 228 après la rupture de l'aiguille 262.

Par exemple, le moyeu 238 et les pales 240 sont réalisées en aluminium et l'arbre 138 est réalisé en acier. La douille 242 peut être réalisée en matériau plastique ou composite, de façon à limiter le risque de frettage précité lors de la rupture de l'aiguille. L'aiguille 274 peut être réalisée en acier (par exemple 32CDV13, 100C6, Z100CD17) ou en aluminium (par exemple 2024, 5086, 6061, 7000.

Dans les deux modes de réalisation décrits dans ce qui précède, la goupille 162, 262 est conçue pour résister au couple de rupture de la roue. La goupille 162, 262 peut être remplacée par des moyens analogues tels que des cannelures. L'arbre 136, 236 pourrait par exemple comprendre à sa périphérie externe des cannelures rectilignes engagées dans des cannelures rectilignes complémentaires de la douille 142, 242.

Le choix de l'un ou l'autre des modes de réalisation décrits ci-dessus peut dépendre notamment des contraintes de configuration de la roue, de la puissance mécanique à transmettre (qui dimensionne indirectement la partie ou l'élément fusible), de l'environnement (notamment vibratoire), etc.

## Revendications

1. Ventilateur (16) pour un groupe de refroidissement d'aéronef, comportant une roue (128, 228) et une ligne d'arbre (136, 236) d'entraînement de la roue autour d'un axe (A), ladite roue comprenant :
- un moyeu (138, 238) portant une rangée annulaire de pales (140, 240), et
- des moyens (142, 242) de liaison à ladite ligne d'arbre, qui sont logés à l'intérieur dudit moyeu, lesdits moyens de liaison comprenant une douille (142, 242) comportant un alésage interne (143, 243) configuré pour recevoir ledit arbre (136, 236), ladite douille étant située sensiblement dans un plan (P, P') transversal audit axe ou est traversé par ledit plan, qui passe sensiblement par lesdites pales (140, 240),
lesdits moyens de liaison comprenant au moins un élément fusible (158, 274) de sécurité qui s'étend ou est disposé autour dudit axe (A) et qui est configuré pour se rompre et désolidariser en rotation au moins une partie desdits moyens de ladite ligne d'arbre lorsqu'un couple d'entraînement de la roue transmis par ladite ligne d'arbre dépasse un certain seuil, ledit au moins un élément fusible ayant une forme allongée, son axe d'allongement étant parallèle audit axe (A).

2. Ventilateur (16) selon la revendication 1, dans lequel ledit au moins un élément fusible (158, 274) est situé sensiblement dans un plan (P, P') transversal audit axe (A) ou est traversé par ledit plan, qui passe sensiblement par lesdites pales (140, 240).

3. Ventilateur (16) selon la revendication 1 ou 2, dans lequel ladite douille (242) est montée dans un orifice central (241) du moyeu (238) et est solidarisée en rotation au moyeu grâce audit au moins un élément fusible.

4. Ventilateur (16) selon la revendication 3, dans lequel ladite douille (242) comprend une collerette annulaire externe (245) appliquée contre une face transversale (256) dudit moyeu (238), ledit au moins un élément fusible étant monté dans des trous borgnes (270, 272) respectifs de ladite collerette et dudit moyeu.

5. Ventilateur (16) selon l'une des revendications précédentes, dans lequel ladite douille (142, 242) comprend au moins une fente transversale (160, 260) configurée pour recevoir une goupille (162, 262) de solidarisation en rotation de la douille audit arbre (136, 236).

6. Ventilateur (16) selon l'une des revendications précédentes, dans lequel ledit au moins un élément fusible comprend une ou plusieurs aiguilles fusibles (274)

7. Ventilateur (16) selon l'une des revendications précédentes, dans lequel ladite roue (128, 228) est du type cage d'écureuil, axiale, centrifuge, ou mixte.

8. Groupe de refroidissement d'aéronef, comportant un échangeur de chaleur, par exemple air-huile, et un ventilateur (16) selon l'une des revendications précédentes.

## Patentansprüche

1. Lüfter (16) für ein Luftfahrzeugkühlaggregat, der ein Rad (128, 228) und einen Wellenstrang (136, 236) zum Antreiben des Rads um eine Achse (A) umfasst, wobei das Rad umfasst:
- eine Nabe (138, 238), die eine ringförmige Reihe von Schaufeln (140, 240) trägt, und
- Mittel (142, 242) zum Verbinden mit dem Wellenstrang, die in dem Inneren der Nabe untergebracht sind, wobei die Verbindungsmittel eine Hülse (142, 242) umfassen, die eine Innenbohrung (143, 243) umfasst, die konfiguriert ist, um die Welle (136, 236) aufzunehmen, wobei die Hülse im Wesentlichen in einer Ebene (P, P') quer zu der Achse liegt oder von der Ebene durchquert ist, die im Wesentlichen durch die Schaufeln (140, 240) hindurchgeht, wobei die Verbindungsmittel mindestens ein schmelzbares Sicherheitselement (158, 274) umfassen, das sich um die Achse (A) erstreckt oder angeordnet ist, und das konfiguriert ist, um zu brechen und mindestens einen Teil der Mittel von dem Wellenstrang zu trennen, wenn ein Antriebsdrehmoment des Rads, das von dem Wellenstrang übertragen wird, einen bestimmten Schwellenwert überschreitet, wobei das mindestens eine schmelzbare Element eine längliche Form aufweist, wobei seine Ausdehnungsachse parallel zu der Achse (A) ist.

2. Lüfter (16) nach Anspruch 1, wobei das mindestens eine schmelzbare Element (158, 274) im Wesentlichen in einer Ebene (P, P') quer zu der Achse (A) liegt oder von der Ebene durchquert wird, die im Wesentlichen durch die Schaufeln (140, 240) hindurchgeht.

3. Lüfter (16) nach Anspruch 1 oder 2, wobei die Hülse (242) in einer zentralen Öffnung (241) der Nabe (238) montiert und mit aufgrund des mindestens einen schmelzbaren Elements in Drehung an der Nabe befestigt ist.

4. Lüfter (16) nach Anspruch 3, wobei die Hülse (242) einen ringförmigen Außenkragen (245) umfasst, der an einer Querfläche (256) der Nabe (238) angelegt ist, wobei das mindestens eine schmelzbare Element in jeweiligen Sacklöchern (270, 272) des Kragens und der Nabe montiert ist.

5. Lüfter (16) nach einem der vorstehenden Ansprüche, wobei die Hülse (142, 242) mindestens einen Querschlitz (160, 260) umfasst, der konfiguriert ist, um einen Stift (162, 262) zur drehfesten Verbindung der Hülse mit der Welle (136, 236) aufzunehmen.

6. Lüfter (16) nach einem der vorstehenden Ansprüche, wobei das mindestens eine schmelzbare Element eine oder mehrere schmelzbare Nadeln (274) umfasst.

7. Lüfter (16) nach einem der vorstehenden Ansprüche, wobei das Rad (128, 228) vom Typ Käfigläufer, axial, zentrifugal oder gemischt ist.

8. Luftfahrzeugkühlaggregat, das einen Wärmetauscher, zum Beispiel Luft-Öl-Wärmetauscher, und einen Lüfter (16) nach einem der vorstehenden Ansprüche umfasst.

## Claims

1. Fan (16) for an aircraft cooling unit, comprising a wheel (128, 228) and a shaft line (136, 236) that drives the wheel about an axis (A), said wheel comprising:
- a hub (138, 238) carrying an annular row of blades (140, 240), and
- means (142, 242) for connection to said shaft line, which are housed inside said hub, said connection means comprising a bush (142, 242) comprising an internal bore (143, 243) configured for receiving said shaft (136, 236), said bush being located approximately in a plane (P, P') transverse to said axis or is traversed by said plane, which passes approximately through said blades (140, 240),
said connection means comprising at least one fusible safety element (158, 274) which extends or is arranged around said axis (A) and which is configured to break and rotationally disengage at least one part of said means of said shaft line when a drive torque of the wheel transmitted by said shaft line exceeds a certain threshold, said at least one fusible element having an elongated shape, its extension axis being parallel to said axis (A).

2. Fan (16) according to claim 1, in which said at least one fusible element (158, 274) is located approximately in a plane (P, P') transverse to said axis (A) or is traversed by said plane, which passes approximately through said blades (140, 240).

3. Fan (16) according to claim 1 or 2, in which said bush (242) is mounted in a central hole (241) of the hub (238) and is rotationally integral with the hub owing to said at least one fusible element.

4. Fan (16) according to claim 3, in which said bush (242) comprises an outer annular flange (245) applied against a transverse face (256) of said hub (238), said at least one fusible element being mounted in respective blind holes (270, 272) of said flange and of said hub.

5. Fan (16) according to one of the preceding claims, in which said bush (142, 242) comprises at least one transverse slot (160, 260) configured for receiving a pin (162, 262) for rotational integration of the bush with said shaft (136, 236).

6. Fan (16) according to one of the preceding claims, in which said at least one fusible element comprises one or more fusible needles (274).

7. Fan (16) according to one of the preceding claims, in which said wheel (128, 228) is of the squirrel cage type, axial, centrifugal, or mixed.

8. Aircraft cooling unit, comprising a heat exchanger, for example air-oil, and a fan (16) according to one of the preceding claims.
